# EUROPÄISCHE PATENTANMELDUNG

(11) **EP 4 835 599 A1**
(43) Veröffentlichungstag der Anmeldung: **04.11.2026**
(21) Anmeldenummer: 26161335.0
(22) Anmeldetag: 27.02.2026
(51) Int. Cl.: G05B 23/02

(54) **SYSTEM ZUR WARTUNG EINER LANDWIRTSCHAFTLICHEN MASCHINE**

(30) Priorität: 28.04.2025 DE 102025116173
(71) Anmelder: CLAAS E-Systems GmbH, 49201 Dissen (DE)
(72) Erfinder: Töniges, Torben, 33602 Bielefeld (DE); Termöhlen, Jan-Aike, 49326 Neuenkirchen (DE)
(74) Vertreter: CLAAS Gruppe

(57) **Zusammenfassung**

Die vorliegende Erfindung betrifft ein System (W) zur Wartung einer landwirtschaftlichen Maschine (100), umfassend: eine Datenerfassungseinheit (105), die dazu vorgesehen und eingerichtet ist, kontinuierlich Maschinen- und Telemetriedaten (D) während des Betriebs der Maschine (100) zu erfassen, wobei die Maschinen- und Telemetriedaten (D) Parameter wie Motorlast, Temperatur, Vibrationen und andere relevante Betriebszustände umfassen; eine Datenanalyseeinheit (110), dazu vorgesehen und eingerichtet ist, einen Normalzustand der Maschine (100) mittels unüberwachten Lernmethoden basierend auf den Maschinen- und Telemetriedaten (D) zu bestimmen; eine Abweichungserkennungseinheit (115), die dazu vorgesehen und eingerichtet ist, eine Abweichung vom Normalzustand der Maschine (100) zu erkennen und einen Bediener (B) der Maschine (100) automatisch über die erkannte Abweichung zu benachrichtigen; eine Fehlerursachenanalyseeinheit (120), die dazu vorgesehen und eingerichtet ist, eine Information zu einer möglichen Fehlerursache (F) basierend auf der erkannten Abweichung bereitzustellen; und eine Prädikationseinheit (125), die dazu vorgesehen und eingerichtet ist, basierend auf der Information zu einer möglichen Fehlerursache (F) einen zukünftigen Zustand der Maschine (100) zu ermitteln, um eine prädiktive Wartung zu planen.

## Beschreibung

Die vorliegende Erfindung betrifft ein System zur prädiktiven Wartung einer landwirtschaftlichen Maschine.

Aus dem Stand der Technik sind Verfahren zur Wartung bzw. zum Reparieren einer landwirtschaftlichen Maschine bekannt.

Die EP 3738421 B1 schlägt hierfür ein Verfahren vor, bei dem in einer Analyseroutine auf Basis von Betriebsdaten der landwirtschaftlichen Arbeitsmaschine eine Ausfalldauerwahrscheinlichkeit oder eine Beschädigungswahrscheinlichkeit der landwirtschaftlichen Arbeitsmaschine oder eines Bauteils der landwirtschaftlichen Arbeitsmaschine ermittelt wird. Auf Basis der Analyseroutine kann eine Lieferroutine initiiert werden.

Nach Lieferung des Ersatzteils ist es in der Regel notwendig, im Servicepunkt Reparaturmaßnahmen einzuleiten. Angesichts der zunehmenden Anzahl und Komplexität der Bauteile sowie der für die Reparatur erforderlichen Werkzeuge werden diese Arbeiten immer anspruchsvoller. Daher besteht ein Bedarf an verbesserten Verfahren, die kostengünstiger, effizienter und kompakter sind. Des Weiteren werden Wartung oder Service von Maschinen in der Regel präventiv, also in regelmäßigen Abständen, und reaktiv, also bei akuten Fehlern bzw. Ausfällen, durchgeführt. Beide Varianten führen zu Ineffizienzen. Bei der präventiven Wartung beruhen die durchgeführten Maßnahmen in der Regel auf Annahmen oder Erfahrungswerten der Servicetechniker, so dass gegebenenfalls Maschinenteile ausgetauscht werden, obwohl dies nicht notwendig gewesen ist. Ein reaktiver Service wiederum führt zu unerwarteten Ausfallzeiten, die Betriebsabläufe stören und - besonders während der Ernte - zu erheblichen finanziellen Verlusten führen.

Die vorliegende Erfindung hat sich zum Ziel gesetzt, ein System zur Wartung einer landwirtschaftlichen Maschine zu entwickeln, die eine schnelle und zuverlässige Wartung ermöglicht.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein System zur Wartung einer landwirtschaftlichen Maschine. Das System kann eine Datenerfassungseinheit umfassen, die dazu vorgesehen und eingerichtet ist, kontinuierlich Maschinen- und Telemetriedaten während des Betriebs der Maschine zu erfassen, wobei die Maschinen- und Telemetriedaten Parameter wie Motorlast, Temperatur, Vibrationen und andere relevante Betriebszustände umfassen. Des Weiteren kann das System eine Datenanalyseeinheit umfassen, die dazu vorgesehen und eingerichtet ist, einen Normalzustand der Maschine mittels unüberwachten Lernmethoden basierend auf den Maschinen- und Telemetriedaten zu bestimmen. Das System kann ferner eine Abweichungserkennungseinheit, die dazu vorgesehen und eingerichtet ist, eine Abweichung vom Normalzustand der Maschine zu erkennen und einen Bediener der Maschine automatisch über die erkannte Abweichung zu benachrichtigen. Das System kann auch eine Fehlerursachenanalyseeinheit umfassen, die dazu vorgesehen und eingerichtet ist, eine Information zu einer möglichen Fehlerursache basierend auf der erkannten Abweichung bereitzustellen. Des Weiteren kann das System eine Prädikationseinheit umfassen, die dazu vorgesehen und eingerichtet ist, basierend auf der Information zu einer möglichen Fehlerursache einen zukünftigen Zustand der Maschine zu ermitteln, um eine prädiktive Wartung zu planen.

Die landwirtschaftliche Maschine kann speziell für die Ernte von Nutzpflanzen vorgesehen sein. Bei der landwirtschaftlichen Arbeitsmaschine kann es sich beispielsweise um einen Feldhäcksler, Mähdrescher oder Traktor handeln. Die landwirtschaftliche Maschine kann selbstfahrend und/oder autonom ausgeprägt sein. Das Warten bzw. Reparieren der landwirtschaftlichen Maschine kann den Prozess bezeichnen, bei dem die landwirtschaftliche Maschine, die defekt oder nicht optimal funktionsfähig ist, wieder in einen betriebsbereiten und effizienten Zustand versetzt wird.

Maschinen- und Telemetriedaten beziehen sich beispielsweise auf die Informationen, die von Maschinen erfasst und übermittelt werden, um deren Betrieb und Leistung zu überwachen. Maschinen- oder Betriebsdaten umfassen möglicherweise spezifische Parameter wie Betriebsstunden, Temperatur und Druck, die zur Bewertung der Effizienz und Identifizierung von Wartungsbedarf genutzt werden. Telemetriedaten können sich beispielsweise auf die Fernübertragung dieser Informationen an zentrale Systeme beziehen, was eine Echtzeitüberwachung und -steuerung ermöglicht.

Der Normalzustand der Maschine könnte den Betriebszustand bezeichnen, in dem eine Maschine optimal funktionieren würde und alle vorgesehenen Parameter innerhalb der definierten Grenzen liegen könnten. In diesem Zustand könnte die Maschine effizient, zuverlässig und ohne Störungen oder Anomalien arbeiten. Der Normalzustand könnte verschiedene Aspekte wie die richtige Temperatur, Druck, Drehzahl und andere betriebsrelevante Kennzahlen umfassen, die möglicherweise in den technischen Spezifikationen der Maschine festgelegt sind. Abweichungen vom Normalzustand könnten auf technische Probleme, Verschleiß oder unzureichende Wartung hinweisen und erforderten möglicherweise eine Analyse sowie eine Intervention, um die Maschine wieder in den Normalzustand zu versetzen.

Eine mögliche Fehlerursache basierend auf der erkannten Abweichung könnte sich auf einen potenziellen Grund oder eine Quelle für ein Problem beziehen, der möglicherweise identifiziert wird, nachdem eine Abweichung vom Normalzustand, d.h. den erwarteten oder normalen Betriebsparametern, einer Maschine, festgestellt worden ist. Wenn eine Abweichung auftritt, beispielsweise eine unerwartete Erhöhung der Temperatur oder eine Abnahme der Leistung, könnte eine Analyse erfolgen, um herauszufinden, warum diese Abweichung möglicherweise aufgetreten ist. Mögliche Fehlerursachen könnten mechanische Probleme, wie Verschleiß oder Beschädigungen von Bauteilen, unzureichende Wartung, falsche Einstellungen oder externe Faktoren wie Umgebungsbedingungen umfassen. Die mögliche Fehlerursache könnte auf verschiedenen Faktoren basierend abgeleitet werden, darunter aktuelle Leistungsdaten, Wartungshistorie, identifizierte Fehlerursachen und voraussichtliche Veränderungen in den Betriebsbedingungen.

Die unüberwachte Lernmethode könnte ein Ansatz im Bereich des maschinellen Lernens sein, bei dem ein Algorithmus auf die Daten, d.h. die Maschinen- und Telemetriedaten, trainiert wird, ohne dass diese Daten mit vorab definierten Labels oder Zielwerten versehen sind. Das Ziel unüberwachter Lernmethoden könnte darin bestehen, Muster, Strukturen oder Gruppierungen innerhalb der Daten zu erkennen und zu extrahieren. Beispiele für unüberwachte Lernmethoden könnten die Clusteranalyse sein, bei der ähnliche Datenpunkte möglicherweise in Gruppen zusammengefasst werden, und Dimensionsreduktionstechniken, die dazu dienen könnten, die Komplexität der Daten zu verringern, während die relevanten Informationen erhalten bleiben. Diese Methoden könnten häufig in der Datenexploration, Anomalieerkennung und in verschiedenen Anwendungen eingesetzt werden, bei denen es möglicherweise schwierig oder unmöglich ist, die Daten im Voraus zu kennzeichnen. Beispiele für unüberwachte Lernmethoden sind K-Means Clustering, hierarchisches Clustering, Principal Component Analysis (PCA), t-Distributed Stochastic Neighbor Embedding (t-SNE), Autoencoder, Isolation Forest, DB-SCAN (Density-Based Spatial Clustering of Applications with Noise) und Gaussian Mixture Models (GMM). Verschiedene Lernmethoden können auch kombiniert werden.

Der zukünftige Zustand der Maschine könnte sich auf den erwarteten oder prognostizierten Betriebszustand einer Maschine zu einem bestimmten Zeitpunkt in der Zukunft beziehen. Der zukünftige Zustand könnte Informationen über mögliche Abnutzung, zu erwartende Ausfälle, Effizienz und Leistungsfähigkeit der Maschine enthalten.

Prädiktive Wartung, auch als vorausschauende Wartung bekannt, könnte eine Instandhaltungsstrategie sein, bei der der Zustand von Maschinen und Anlagen kontinuierlich überwacht wird, um den optimalen Zeitpunkt für Wartungsmaßnahmen vorherzusagen. Diese Vorgehensweise könnte auf der Analyse von Echtzeitdaten basieren, die durch Sensoren und Telemetrie erfasst werden, sowie auf historischen Leistungsdaten und Algorithmen zur Datenanalyse. Ziel der prädiktiven Wartung könnte es sein, potenzielle Probleme frühzeitig zu identifizieren, bevor sie möglicherweise zu Ausfällen oder kostspieligen Reparaturen führen, wodurch die Effizienz gesteigert und die Lebensdauer der Maschinen verlängert werden könnte.

Ein wesentlicher Vorteil des Systems besteht beispielsweise darin, die Leistungsfähigkeit und Lebensdauer landwirtschaftlicher Arbeitsmaschinen vorausschauend zu erhalten oder sogar zu verbessern. Das System kann zu einem störungsfreien landwirtschaftlichen Betrieb beitragen. Darüber hinaus ermöglicht das System eine automatisierte, zeitlich optimal abgestimmte und/oder kosteneffiziente Wartung, was sowohl den Betrieb als auch die Kostenkontrolle erleichtern könnte. Die prädiktive Wartung kann ferner durchgeführt werden, um den Nachteilen der präventiven und reaktiven Wartung entgegenzuwirken. Vorteilhafterweise funktioniert das erfindungsgemäße System auch unter folgenden Einflüssen und Randbedingungen, die sich auch in extremen Dynamikbereichen der Sensoren darstellen, d.h. beispielsweise extremen Wetterbedingungen und Umwelteinflüsse, z.B. Staub, Schmutz, Feuchtigkeit und Temperaturschwankungen, Variabilität der Arbeitslast und des Terrains, z. B. Straßenfahrten vs. Grubbern, Saisonale Nutzung und fehlende Daten durch schlechte Netzabdeckung in ländlichen Regionen.

In einem weiteren Aspekt kann die Abweichungserkennungseinheit dazu vorgesehen und eingerichtet sein, einen Abweichungswert zu ermitteln, der die Abweichung vom Normalzustand der Maschine quantifiziert, wobei das Ermitteln das Definieren eines Schwellenwertes für den Abweichungswert umfasst, der festlegt, ab wann eine Abweichung als signifikant betrachtet wird, wobei der Schwellenwert dynamisch angepasst werden kann, basierend auf historischen Daten oder spezifischen Betriebsbedingungen der Maschine.

Der Abweichungswert könnte sich darauf beziehen, einen spezifischen numerischen Wert oder eine Kennzahl zu bestimmen, die möglicherweise angibt, wie stark die aktuellen Betriebsparameter einer Maschine von den definierten Normalzuständen abweichen. Dieser Abweichungswert könnte auf verschiedenen Messungen basieren, wie beispielsweise Temperatur, Druck, Vibration oder anderen relevanten Leistungsindikatoren. Durch die Quantifizierung dieser Abweichung könnte es möglich sein, den Schweregrad des Problems zu bewerten, potenzielle Ursachen zu identifizieren und gezielte Maßnahmen zur Wiederherstellung des Normalzustands zu planen.

In einem weiteren Aspekt kann die Datenerfassungseinheit mindestens einen Sensor umfassen, der Maschinen- und Telemetriedaten während des Betriebs der Maschine in Echtzeit erfasst.

Der mindestens eine Sensor kann in Echtzeit Informationen wie Motordrehzahl, Temperatur, Flüssigkeitsstände und andere kritische Messwerte sammeln, die für den fehlerfreien Betrieb der landwirtschaftlichen Maschine entscheidend sind. Sobald ein Sensor eine Abweichung von den normalen Betriebsbedingungen feststellt, beispielsweise eine Überhitzung oder eine ungewöhnliche Vibration, wird diese Anomalie möglicherweise sofort vom System erkannt. Das System kann diese Daten verarbeiten und analysiert sie beispielsweise anhand vordefinierter Abweichungserkennungsalgorithmen, um möglicherweise festzustellen, ob eine Wartungsmaßnahme erforderlich ist.

In einem weiteren Aspekt kann die Prädikationseinheit dazu vorgesehen und eingerichtet sein, einen digitalen Zwilling der Maschine basierend auf der erkannten Abweichung zu bestimmen und den zukünftigen Zustand der Maschine zu ermitteln, indem mittels des digitalen Zwillings eine Simulation für einen vorbestimmten Zeitraum durchgeführt wird.

Der digitale Zwilling der Maschine könnte ein virtuelles Modell sein, das die physische Maschine und ihre Eigenschaften, Verhaltensweisen und Betriebszustände in Echtzeit widerspiegelt. Der digitale Zwilling könnte aus verschiedenen Datenquellen gespeist werden, darunter Sensordaten, historische Leistungsdaten und Simulationen, und ermöglicht möglicherweise eine umfassende Analyse und Überwachung des Maschinenverhaltens. Der digitale Zwilling könnte verwendet werden, um Vorhersagen über Wartungsbedarf zu treffen, mögliche Fehlerursachen zu identifizieren und die Effizienz zu steigern.

In einem weiteren Aspekt kann das System eine Kommunikationsschnittstelle umfassen, die vorgesehen und eingerichtet ist, die Maschinen- und Telemetriedaten in Echtzeit an einen zentralen Server zu übertragen, wobei die Kommunikationsschnittstelle vorzugsweise eine drahtlose Verbindung zu einem Netzwerk ermöglicht, um die Maschinen- und Telemetriedaten an den zentralen Server zu übertragen.

Das System kann beispielsweise mit einem Server oder einer Cloud drahtlos in Verbindung stehen. Dabei kann der Server mit der landwirtschaftlichen Arbeitsmaschine Daten austauschen. Der Server kann beispielsweise Sensordaten, Maschinendaten oder Modelldaten verarbeiten, speichern und analysieren. Der Server kann Mittel zum Trainieren von Modellen bereitstellen. Beispielsweise kann der Server Rechenressourcen, spezialisierte Software und Algorithmen umfassen, um große Datenmengen effizient zu verarbeiten und das Modell zu optimieren.

In einem weiteren Aspekt kann die Datenanalyseeinheit dazu vorgesehen und eingerichtet sein, mittels maschinellen Lernens zumindest zwei Cluster in den Maschinen- und Telemetriedaten zu identifizieren, wobei ein Cluster dem Normalzustand zugeordnet wird und zumindest ein weiteres Cluster einer Anomalie zugeordnet wird, wobei das der Anomalie zugeordnete Cluster dynamisch anpassbar ist.

In einem weiteren Aspekt kann die Abweichungserkennungseinheit dazu vorgesehen und eingerichtet sein, einen Clusterabstand für die Abweichung vom Normalzustand der Maschine zu ermitteln, indem ein erstes Clusterzentrum des dem Normalzustand zugeordneten Clusters und ein zweites Clusterzentrum des der Anomalie zugeordneten Clusters ermittelt wird und der Clusterabstand aus dem Abstand des ersten Clusterzentrums und des zweiten Clusterzentrums bestimmt wird.

Das Cluster kann sich auf eine Ansammlung von gleichartigen oder verwandten Maschinen- und Telemetriedaten beziehen, wobei die Maschinen- und Telemetriedaten in einem Cluster durch bestimmte Merkmale oder Eigenschaften miteinander verbunden sind. Diese Maschinen- und Telemetriedaten befinden sich beispielsweise in unmittelbarer Nähe zueinander und bilden eine zusammenhängende Gruppe innerhalb eines größeren Rahmens. Es können auch besonders dichte Punktewolken, d.h. ein vorbestimmtes Volumen mit einer hohen Anzahl an Punkten, als ein Cluster ermittelt werden. Mittels des Clusterabstands kann möglicherweise ein Bauteil der Maschine identifiziert werden, das der Grund bzw. die Ursache für die Abweichung ist.

In einem weiteren Aspekt kann die Datenanalyseeinheit eine Vielzahl von Abweichungen vom Normalzustand über einen vorbestimmten Zeitraum speichert und mittels der gespeicherten Abweichungen ein überwachtes Modell trainiert.

In einem weiteren Aspekt kann die Abweichungserkennungseinheit ein visuelles und/oder akustisches Signal an einen Bediener der Maschine ausgeben, wenn eine Abweichung vom Normalzustand erkannt wird.

Ein visuelles und/oder akustisches Signal an einen Bediener der Maschine auszugeben, könnte bedeuten, dass die Maschine oder ein angeschlossenes System bestimmte Informationen oder Warnungen möglicherweise durch visuelle oder akustische Mittel kommuniziert. Visuelle Signale könnten beispielsweise in Form von Lichtanzeigen, Bildschirmanzeigen oder Alarmleuchten erfolgen, während akustische Signale durch Töne, Pieptöne oder Sprachansagen vermittelt werden könnten. Diese Signale könnten dazu dienen, den Bediener auf den aktuellen Betriebszustand der Maschine hinzuweisen, auf Abweichungen, Fehlfunktionen oder notwendige Wartungsmaßnahmen aufmerksam zu machen. Durch die Ausgabe solcher Signale könnte sichergestellt werden, dass der Bediener rechtzeitig informiert wird, um geeignete Maßnahmen zu ergreifen und die Sicherheit sowie die Effizienz des Betriebs möglicherweise zu gewährleisten.

Das visuelle und/oder akustische Signal könnte dem zukünftigen Zustand der Maschine entsprechen, indem es Informationen bereitstellt, die auf prognostizierten Veränderungen oder potenziellen Problemen basieren. Beispielsweise könnte ein akustisches Alarmsignal ertönen, wenn Sensoren eine Abweichung von den Normalparametern feststellen, die auf einen bevorstehenden Ausfall oder eine ineffiziente Betriebsweise hindeuten könnte. Durch die Bereitstellung solcher Signale, die auf einer Analyse von Echtzeitdaten und historischen Informationen basieren, könnte der Bediener in die Lage versetzt werden, proaktiv auf die bevorstehenden Veränderungen zu reagieren und geeignete Maßnahmen zu ergreifen.

In einem weiteren Aspekt kann die Fehlerursachenanalyseeinheit historische Daten zu ähnlichen Abweichungen nutzen, um die Information zu einer möglichen Fehlerursache zu ermitteln.

In einem weiteren Aspekt kann das System eine Wartungseinheit umfassen, die dazu vorgesehen und eingerichtet ist, basierend auf dem zukünftigen Zustand der Maschine eine Wartung durchzuführen, wobei die Wartungseinheit eine Vielzahl von Wartungswerkzeugen bereitstellt, die bei der Wartung der Maschine zum Einsatz kommen.

Die Wartungseinheit (auch Wartungsassistent genannt) unterstützt vorteilhafterweise einen Bediener bzw. Techniker bei der Wartung der landwirtschaftlichen Maschine. Die Wartungseinheit kann auch interaktive Elemente enthalten, wie z.B. Videos oder Diagramme, die dem Techniker zeigen, wie bestimmte Aufgaben korrekt ausgeführt werden. Darüber hinaus ist die Wartungseinheit möglicherweise mit der Fähigkeit ausgestattet, Feedback vom Techniker zu erfassen, um sicherzustellen, dass jede Wartungsaufgabe ordnungsgemäß abgeschlossen wurde, und um bei Bedarf weitere Unterstützung anzubieten.

In einem weiteren Aspekt kann die Wartungseinrichtung vorgesehen und eingerichtet sein, Wartungsschritte basierend auf der prädiktiven Wartung zu ermitteln und einen Fortschritt bei der Durchführung der Wartungsschritte zu überwachen.

In einem weiteren Aspekt kann die Prädikationseinheit eine Benutzeroberfläche umfassen, über die Servicetechniker auf die Maschinen- und Telemetriedaten zugreifen und die prädiktive Wartung einsehen können.

In einem weiteren Aspekt kann das System eine Servicestation und eine Auftragserstellungseinheit umfassen. Dabei kann die Auftragserstellungseinheit vorgesehen und eingerichtet sein, einen Arbeitsauftrag basierend auf der prädiktiven Wartung zu erstellen und den Arbeitsauftrag einer Servicestation zuzuordnen.

Die Servicestation kann eine speziell ausgestattete Einrichtung sein, die möglicherweise alle notwendigen Werkzeuge, Ersatzteile und Technologien bereitstellt, um umfassende Inspektions- und Reparaturarbeiten effizient und sicher durchzuführen. Die Servicestation bietet qualifiziertes Personal (d.h. Techniker), das geschult ist, um präventive Wartungsmaßnahmen sowie Diagnose- und Reparaturaufgaben durchzuführen, um die optimale Leistung und Zuverlässigkeit der landwirtschaftlichen Arbeitsmaschine zu gewährleisten. In der Servicestation kann der Reparaturprozess automatisiert durchgeführt werden. Das in der Servicestation durchgeführte Verfahren kann dabei helfen die landwirtschaftliche Maschine effizienter und genauer zu reparieren. Es ist möglich, dass die Servicestation verschiedene Vorrichtungen oder mobile Elemente (bspw. Drohnen) zur Durchführung des Verfahrens einem der vorhergehenden Aspekte aufweist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Mit anderen Worten ist es möglich, dass es sich bei den Verfahren um computer-implementierte Verfahren handelt. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: eine schematische Darstellung eines Systems zur Wartung einer landwirtschaftlichen Maschine gemäß einer Ausführungsform;
- Fig. 2: eine schematische Darstellung eines Verfahrens zum Warten einer landwirtschaftlichen Maschine gemäß einer Ausführungsform; und
- Fig. 3: eine schematische Darstellung des Systems W mit einer Servicestation und einer Kommunikationsschnittstelle gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

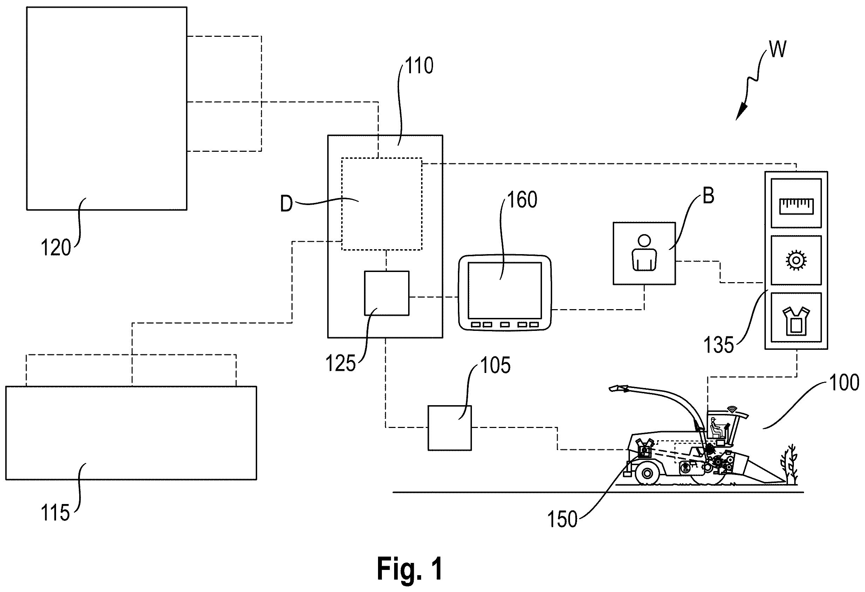

Fig. 1 zeigt eine schematische Darstellung eines Systems W zur Wartung einer landwirtschaftlichen Maschine 100 gemäß einer Ausführungsform.

Bei der landwirtschaftlichen Maschine 100 handelt es sich in diesem Beispiel um einen Feldhäcksler, der für die Ernte von Nutzpflanzen vorgesehen ist.

Das System W umfasst eine Datenerfassungseinheit 105, die dazu vorgesehen und eingerichtet ist, kontinuierlich Maschinen- und Telemetriedaten D während des Betriebs der Maschine 100 zu erfassen, wobei die Maschinen- und Telemetriedaten D Parameter wie Motorlast, Temperatur, Vibrationen und andere relevante Betriebszustände umfassen kann. Die Datenerfassungseinheit 105 kann mindestens einen Sensor 150 umfassen. Der Sensor 150 ist derart gestaltet, dass er die Maschinen- und Telemetriedaten D während des Betriebs der Maschine 100 in Echtzeit erfasst, d.h. der Sensor 150 kann Informationen wie Motordrehzahl, Temperatur, Flüssigkeitsstände und andere kritische Messwerte sammeln, die für den fehlerfreien Betrieb der landwirtschaftlichen Maschine 100 entscheidend sind. Der mindestens eine Sensor 150 kann dafür in der Maschine 100 oder einer Komponente der Maschine 100, wie beispielsweise einen Motor oder einem Häckselwerk des Feldhäckslers, integriert sein.

Des Weiteren umfasst das System W eine Datenanalyseeinheit 110, die dazu vorgesehen und eingerichtet ist, einen Normalzustand der Maschine 100 mittels unüberwachten Lernmethoden basierend auf den Maschinen- und Telemetriedaten D zu bestimmen. Die unüberwachte Lernmethode ist dabei ein Ansatz im Bereich des maschinellen Lernens, bei dem ein Algorithmus auf die Daten, d.h. die Maschinen- und Telemetriedaten D, trainiert wird, ohne dass diese Daten mit vorab definierten Labels oder Zielwerten versehen sind.

Das System W umfasst ferner eine Abweichungserkennungseinheit 115, die dazu vorgesehen und eingerichtet ist, eine Abweichung vom Normalzustand der Maschine 100 zu erkennen und einen Bediener B der Maschine 100 automatisch über die erkannte Abweichung zu benachrichtigen.

Des Weiteren umfasst das System W eine Fehlerursachenanalyseeinheit 120, die dazu vorgesehen und eingerichtet ist, eine Information zu einer möglichen Fehlerursache basierend auf der erkannten Abweichung bereitzustellen. Dabei kann die Fehlerursachenanalyseeinheit 120 möglicherweise historische Daten zu ähnlichen Abweichungen nutzen, um die Information zu einer möglichen Fehlerursache zu ermitteln.

Das System W umfasst auch eine Prädikationseinheit 125, die dazu vorgesehen und eingerichtet ist, basierend auf der Information zu einer möglichen Fehlerursache einen zukünftigen Zustand der Maschine 100 zu ermitteln, um eine prädiktive Wartung zu planen. Die Prädikationseinheit 125 kann eine Benutzeroberfläche 160 umfassen, über die Servicetechniker B auf die Maschinen- und Telemetriedaten D zugreifen und die prädiktive Wartung einsehen können.

Das System W umfasst eine Wartungseinheit 135, die dazu vorgesehen und eingerichtet ist, basierend auf dem zukünftigen Zustand der Maschine 100 eine Wartung durchzuführen, wobei die Wartungseinheit 135 eine Vielzahl von Wartungswerkzeugen bereitstellt, die bei der Wartung der Maschine 100 zum Einsatz kommen. Die Wartungseinheit 135 kann auch als Wartungsassistent ausgeführt sein, indem die Wartungseinheit 135 mit einem Bediener bzw. Techniker B interagiert und ihn so bei der Wartung der landwirtschaftlichen Maschine 100 unterstützt. Die Wartungseinheit 135 kann interaktive Elemente enthalten, wie z.B. Videos oder Diagramme, die dem Techniker B zeigen, wie bestimmte Aufgaben mit den Wartungswerkzeugen korrekt ausgeführt werden. Darüber hinaus ist die Wartungseinheit 135 möglicherweise mit der Fähigkeit ausgestattet, Feedback vom Techniker B zu erfassen, um sicherzustellen, dass jede Wartungsaufgabe ordnungsgemäß abgeschlossen wurde, und um bei Bedarf weitere Unterstützung anzubieten. Die Wartungseinheit 135 kann einen Techniker B in Echtzeit durch Wartungsschritte führen. Dabei kann die Wartungseinrichtung 135 vorgesehen und eingerichtet sein, die Wartungsschritte basierend auf der prädiktiven Wartung zu ermitteln und einen Fortschritt bei der Durchführung der Wartungsschritte zu überwachen. Der Fortschritt der Wartungsschritte wird kontinuierlich überwacht, indem in der Maschine 100 integrierte Sensoren 150 und/oder Feedback-Systeme eingesetzt werden, um eine direkte Rückmeldung zu erhalten und den Status der Arbeiten zu überprüfen. Dabei kann zeitgleich eine Dokumentationserstellung durchgeführt werden, die alle relevanten Informationen und Fortschritte der Wartung detailliert festhält.

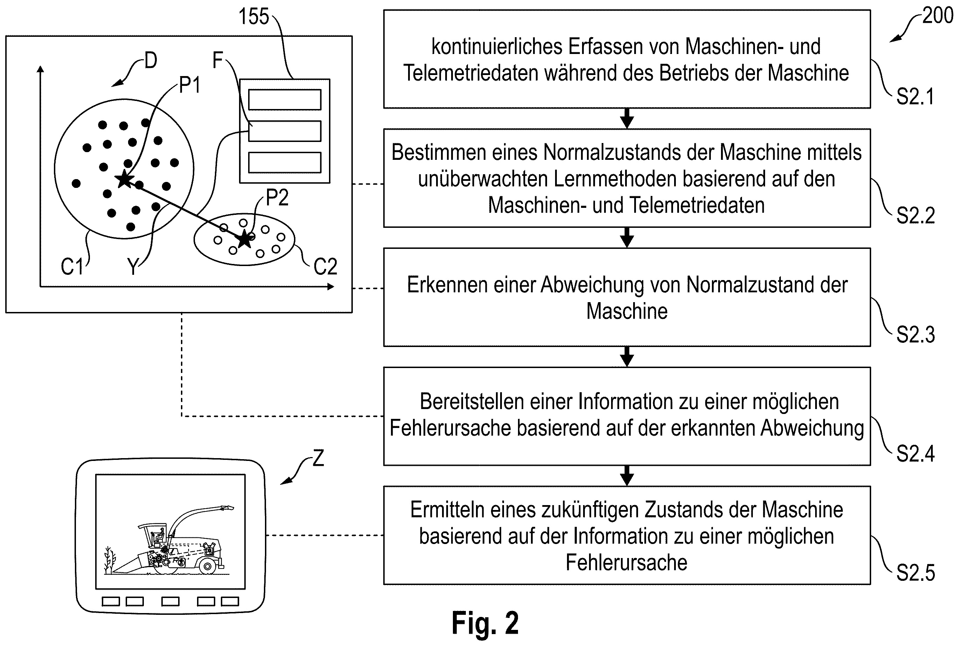

Fig. 2 zeigt eine schematische Darstellung eines Verfahrens 200 zum Warten einer landwirtschaftlichen Maschine 100 gemäß einer Ausführungsform.

Die hier nicht abgebildete landwirtschaftliche Maschine 100 ist einem Servicestation zugeordnet. Dabei steht die Servicestation zur Durchführung von Wartungsschritten an der landwirtschaftlichen Arbeitsmaschine 100 bereit, damit die Maschine 100 funktions- und leistungsfähig wird.

Das Verfahren 200 kann in einem ersten Schritt S2.1 ein kontinuierliches Erfassen von Maschinen- und Telemetriedaten D während des Betriebs der Maschine 100 umfassen. Die Maschinen- und Telemetriedaten D des Feldhäckslers umfassen hier beispielhaft Informationen zu Betriebsstunden (bspw. 1500 Stunden seit der letzten Wartung), Durchsatz (bspw. 100 t/h bei Maisernte), Arbeitsgeschwindigkeit (bspw. 5 km/h), Motortemperatur (bspw. 85 °C), Hydraulikdruck (bspw. 220 Bar), GPS-Standortdaten und die Feuchtigkeit der Ernte (bspw. 18 %).

In einem weiteren Schritt S2.2 kann das Verfahren 200 ein Bestimmen eines Normalzustands der Maschine 100 mittels unüberwachten Lernmethoden basierend auf den Maschinen- und Telemetriedaten D umfassen. Um den Normalzustand der Maschine 100 zu bestimmen, kann als unüberwachte Lernmethoden das K-Means Clustering eingesetzt werden, um die gesammelten Daten zu analysieren und Muster zu identifizieren. Mittels des K-Means Clustering können zwei Cluster C1, C2 in den Maschinen- und Telemetriedaten D identifiziert werden, wobei ein Cluster C1 dem Normalzustand zugeordnet wird und zumindest ein weiteres Cluster C2 einer Anomalie zugeordnet wird. Das Clustering kann mittels der Datenanalyseeinheit 110 durchgeführt werden.

Das der Anomalie zugeordnete Cluster C2 kann dynamisch anpassbar sein. Die dynamische Anpassbarkeit des der Anomalie zugeordneten Clusters C2 bedeutet, dass das System in der Lage ist, die Struktur und Eigenschaften des Clusters während der Analyse neuer oder bestehender Daten dynamisch zu verändern. Wenn eine Anomalie erkannt wird, kann das System beispielsweise das Cluster C2 erweitern, um neue, ähnliche Datenpunkte einzuschließen, oder sogar neu definieren, indem es ein separates Cluster für häufige Anomalien bildet. Diese Anpassungsfähigkeit ermöglicht es dem System W, kontinuierlich zu lernen und sich an Echtzeit-Datenströme anzupassen, was die Genauigkeit bei der Erkennung von Anomalien und deren Klassifikation verbessert.

Das Verfahren 200 kann in einem weiteren Schritt S2.3 eine Abweichung vom Normalzustand der Maschine 100 erkennen. Dafür kann ein Abweichungswert ermittelt werden, der die Abweichung vom Normalzustand der Maschine 100 quantifiziert. Die Abweichung vom Normalzustand der Maschine 100 kann quantifiziert werden, indem ein Abweichungswert ermittelt wird. Dabei kann ein Schwellenwert für den Abweichungswert definiert werden, wobei der Schwellenwert festlegt, ab wann eine Abweichung als signifikant betrachtet wird. Ferner kann der Schwellenwert dynamisch angepasst werden, basierend auf historischen Daten oder spezifischen Betriebsbedingungen der Maschine 100.

Die Abweichungserkennungseinheit 115 kann dazu vorgesehen und eingerichtet sein, einen Clusterabstand Y für die Abweichung vom Normalzustand der Maschine 100 zu ermitteln, indem ein erstes Clusterzentrum P1 des dem Normalzustand zugeordneten Clusters C1 und ein zweites Clusterzentrum P2 des der Anomalie zugeordneten Clusters C2 ermittelt wird und der Clusterabstand Y aus dem Abstand des ersten Clusterzentrums P1 und des zweiten Clusterzentrums P2 bestimmt wird. Mittels des Clusterabstands Y kann möglicherweise ein Bauteil der Maschine 100 identifiziert werden, das der Grund bzw. die Ursache für die Abweichung ist. Die Information über das Bauteil der Maschine 100 kann dem Servicetechniker B ausgegeben werden. Somit wird der Servicetechniker B durch die bereitgestellten Informationen bei der Wartung unterstützt, da das System W die fehlerhaften Systemkomponenten direkt ausgibt.

In einem weiteren Schritt S2.4 kann das Verfahren 200 eine Information zu einer möglichen Fehlerursache basierend auf der erkannten Abweichung bereitstellen. Dieser Schritt kann erfolgen, nachdem das System W Anomalien oder Abweichungen in den Maschinen- und Telemetriedaten D identifiziert hat, die auf einen potenziellen Fehler oder ein Problem hindeuten. Das Verfahren 200 greift dabei auf eine vorab definierte Liste 155 von häufigen Fehlerursachen zurück, die typischerweise mit den beobachteten Abweichungen in Zusammenhang stehen. Anhand von Kriterien wie dem Clusterabstand Y, der Art der Abweichung, der Schwere der Anomalie und den spezifischen Betriebsdaten kann das System 100 die wahrscheinlichste Fehlerursache F aus der Liste 155 auswählen und dem Benutzer B präsentieren. Der Bediener B der Maschine 100 kann automatisch über die erkannte Abweichung benachrichtigt werden. Dazu kann die Abweichungserkennungseinheit 115 ein visuelles und/oder akustisches Signal an den Bediener B ausgeben, wenn eine Abweichung vom Normalzustand erkannt wird. Das visuelle und/oder akustische Signal kann der möglichen Fehlerursache F zugeordnet sein, d.h. jeder Fehlerursache kann ein spezifisches Signal zugeordnet sein.

Das Verfahren 200 kann einen weiteren Schritt S2.5 umfassen, der vorsieht, einen zukünftigen Zustand der Maschine 100 basierend auf der Information zu einer möglichen Fehlerursache zu ermitteln, um eine prädiktive Wartung zu planen. Um einen zukünftigen Zustand der Maschine 100 zu ermitteln, kann die Prädikationseinheit 125 dazu vorgesehen und eingerichtet sein, einen digitalen Zwilling Z der Maschine 100 basierend auf der erkannten Abweichung zu bestimmen. Es kann der zukünftige Zustand der Maschine 100 ermittelt werden, indem mittels des digitalen Zwillings Z eine Simulation für einen vorbestimmten Zeitraum durchgeführt wird.

Die Planung der prädiktiven Wartung kann das Ermitteln von Wartungsschritten betreffen. Basierend auf den Wartungsschritten bzw. dem zukünftigen Zustand der Maschine 100 kann eine Wartung, d.h. eine Reparatur, durchgeführt werden. Dabei kann eine Vielzahl von Wartungswerkzeugen bereitgestellt werden, die bei der Wartung der Maschine 100 zum Einsatz kommen. Die Wartungswerkzeuge können die Wartungsschritte automatisiert durchführen.

Mit anderen Worten ermöglicht das System W zwei Varianten der Datenanalyse. Zum einen ermöglicht es die Erkennung von Abweichungen vom Normalzustand einer Maschine 100, beispielsweise durch unüberwachtes Training. In diesem Zusammenhang könnte es vorkommen, dass eine Maschine 100 über einen bestimmten Zeitraum hinweg überlastet wird, was zu einer festgestellten Abweichung führt, die auf einen bereits aufgetretenen Fehler im Motor hinweist. Zum anderen ermöglicht das System W eine präzise Vorhersage des zukünftigen Maschinenzustands. Während des regulären Betriebs werden alle relevanten Daten analysiert, um fundierte Aussagen über die künftige Leistungsfähigkeit der Maschine 100 zu treffen. So können Nutzer rechtzeitig erkennen, wie lange einzelne Systemkomponenten voraussichtlich noch einsatzbereit sind, sofern der aktuelle Betriebszustand unverändert bleibt.

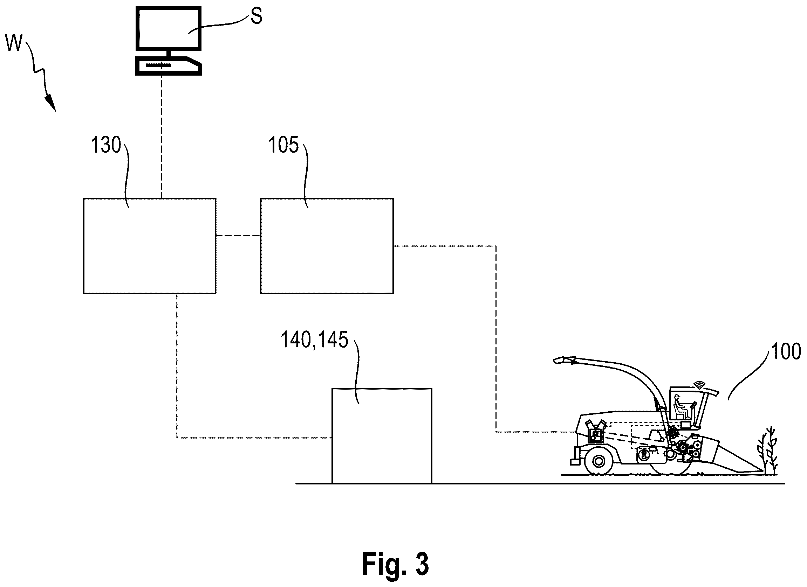

Fig. 3 zeigt eine schematische Darstellung des Systems W mit einer Servicestation 140 und einer Kommunikationsschnittstelle 130 gemäß einer Ausführungsform. Das System W kann ferner eine Auftragserstellungseinheit 145 umfassen, die in der Servicestation 140 integriert ist.

In der Servicestation 140 kann der Reparaturprozess automatisiert durchgeführt werden. Es ist möglich, dass die Servicestation 140 verschiedene Vorrichtungen oder mobile Elemente (bspw. Drohnen) zur Durchführung des Verfahrens einem der vorhergehenden Aspekte aufweist. Die Auftragserstellungseinheit 145 kann vorgesehen und eingerichtet sein, einen Arbeitsauftrag basierend auf der prädiktiven Wartung zu erstellen und den Arbeitsauftrag der Servicestation 140 zuzuordnen. Somit können rechtzeitig die notwendigen Wartungswerkzeuge bereitgestellt werden.

Das System W umfasst ferner eine Kommunikationsschnittstelle 130, die vorgesehen und eingerichtet ist, die Maschinen- und Telemetriedaten D in Echtzeit an einen zentralen Server S zu übertragen, wobei die Kommunikationsschnittstelle 130 vorzugsweise eine drahtlose Verbindung zu einem Netzwerk ermöglicht, um die Maschinen- und Telemetriedaten D an den zentralen Server S zu übertragen. Dafür kann die Kommunikationsschnittstelle 130 mit der Datenerfassungseinheit 105 in Verbindung stehen und Daten austauschen. Ferner kann die Kommunikationsschnittstelle 130 mit der Servicestation 140 in Verbindung stehen. Der zentrale Server S kann weitere Bestandteile des Systems W umfassen, insbesondere die Datenanalyseeinheit 110, die Abweichungserkennungseinheit 115, die Fehlerursachenanalyseeinheit 120 und die Prädikationseinheit 125.

### Bezugszeichenliste

- 100: landwirtschaftliche Maschine
- 105: Datenerfassungseinheit
- 110: Datenanalyseeinheit
- 115: Abweichungserkennungseinheit
- 120: Fehlerursachenanalyseeinheit
- 125: Prädikationseinheit
- 130: Kommunikationsschnittstelle
- 135: Wartungseinheit
- 140: Servicestation
- 145: Auftragserstellungseinheit
- 150: Sensor
- 155: Liste von häufigen Fehlerursachen
- 160: Benutzeroberfläche
- 200: Verfahren
- S2.1: kontinuierliches Erfassen von Maschinen- und Telemetriedaten während des Betriebs der Maschine
- S2.2: Bestimmen eines Normalzustands der Maschine mittels unüberwachten Lernmethoden basierend auf den Maschinen- und Telemetriedaten
- S2.3: Erkennen einer Abweichung vom Normalzustand der Maschine
- S2.4: Bereitstellen einer Information zu einer möglichen Fehlerursache basierend auf der erkannten Abweichung
- S2.5: Ermitteln eines zukünftigen Zustands der Maschine basierend auf der Information zu einer möglichen Fehlerursache
- W: System zur Wartung einer landwirtschaftlichen Maschine
- B: Bediener, Techniker, Servicetechniker
- F: mögliche Fehlerursache
- C1, C2: Cluster
- P1, P2: Clusterzentrum
- Y: Clusterabstand
- Z: digitaler Zwilling

## Patentansprüche

1. System (W) zur Wartung einer landwirtschaftlichen Maschine (100),
umfassend:
eine Datenerfassungseinheit (105), die dazu vorgesehen und eingerichtet ist, kontinuierlich Maschinen- und Telemetriedaten (D) während des Betriebs der Maschine (100) zu erfassen, wobei die Maschinen- und Telemetriedaten (D) Parameter wie Motorlast, Temperatur, Vibrationen und andere relevante Betriebszustände umfassen;
eine Datenanalyseeinheit (110), die dazu vorgesehen und eingerichtet ist, einen Normalzustand der Maschine (100) mittels unüberwachten Lernmethoden basierend auf den Maschinen- und Telemetriedaten (D) zu bestimmen;
eine Abweichungserkennungseinheit (115), die dazu vorgesehen und eingerichtet ist, eine Abweichung vom Normalzustand der Maschine (100) zu erkennen und einen Bediener (B) der Maschine (100) automatisch über die erkannte Abweichung zu benachrichtigen;
eine Fehlerursachenanalyseeinheit (120), die dazu vorgesehen und eingerichtet ist, eine Information zu einer möglichen Fehlerursache (F) basierend auf der erkannten Abweichung bereitzustellen; und
eine Prädikationseinheit (125), die dazu vorgesehen und eingerichtet ist, basierend auf der Information zu einer möglichen Fehlerursache (F) einen zukünftigen Zustand der Maschine (100) zu ermitteln, um eine prädiktive Wartung zu planen.

2. System (W) nach Anspruch 1, wobei die Abweichungserkennungseinheit (115) dazu vorgesehen und eingerichtet ist, einen Abweichungswert zu ermitteln, der die Abweichung vom Normalzustand der Maschine (100) quantifiziert, wobei das Ermitteln das Definieren eines Schwellenwertes für den Abweichungswert umfasst, der festlegt, ab wann eine Abweichung als signifikant betrachtet wird, wobei der Schwellenwert dynamisch angepasst werden kann, basierend auf historischen Daten oder spezifischen Betriebsbedingungen der Maschine (100).

3. System (W) nach Anspruch 1 oder 2, wobei die Datenerfassungseinheit (105) mindestens einen Sensor (150) umfasst, der Maschinen- und Telemetriedaten (D) während des Betriebs der Maschine (100) in Echtzeit erfasst.

4. System (W) nach einem der vorhergehenden Ansprüche, wobei die Prädikationseinheit (125) dazu vorgesehen und eingerichtet ist, einen digitalen Zwilling (Z) der Maschine (100) basierend auf der erkannten Abweichung zu bestimmen und den zukünftigen Zustand der Maschine (100) zu ermitteln, indem mittels des digitalen Zwillings (Z) eine Simulation für einen vorbestimmten Zeitraum durchgeführt wird.

5. System (W) nach einem der vorhergehenden Ansprüche, ferner umfassend:
eine Kommunikationsschnittstelle (130), die vorgesehen und eingerichtet ist, die Maschinen- und Telemetriedaten (D) in Echtzeit an einen zentralen Server zu übertragen, wobei die Kommunikationsschnittstelle (130) vorzugsweise eine drahtlose Verbindung zu einem Netzwerk ermöglicht, um die Maschinen- und Telemetriedaten (D) an den zentralen Server zu übertragen.

6. System (W) nach einem der vorhergehenden Ansprüche, wobei die Datenanalyseeinheit (110) dazu vorgesehen und eingerichtet ist, mittels maschinellen Lernens zumindest zwei Cluster (C1, C2) in den Maschinen- und Telemetriedaten (D) zu identifizieren, wobei ein Cluster (C1) dem Normalzustand zugeordnet wird und zumindest ein weiteres Cluster (C2) einer Anomalie zugeordnet wird, wobei das der Anomalie zugeordnete Cluster dynamisch anpassbar ist.

7. System (W) nach Anspruch 6, wobei die Abweichungserkennungseinheit (115) dazu vorgesehen und eingerichtet ist, einen Clusterabstand (Y) für die Abweichung vom Normalzustand der Maschine (100) zu ermitteln, indem ein erstes Clusterzentrum (P1) des dem Normalzustand zugeordneten Clusters und ein zweites Clusterzentrum (P2) des der Anomalie zugeordneten Clusters ermittelt wird und der Clusterabstand (Y) aus dem Abstand des ersten Clusterzentrums (P1) und des zweiten Clusterzentrums (P2) bestimmt wird.

8. System (W) nach einem der vorhergehenden Ansprüche, wobei die Datenanalyseeinheit (110) eine Vielzahl von Abweichungen vom Normalzustand über einen vorbestimmten Zeitraum speichert und mittels der gespeicherten Abweichungen ein überwachtes Modell trainiert.

9. System (W) nach einem der vorhergehenden Ansprüche, wobei die Abweichungserkennungseinheit (115) ein visuelles und/oder akustisches Signal an einen Bediener (B) der Maschine (100) ausgibt, wenn eine Abweichung vom Normalzustand erkannt wird.

10. System (W) nach einem der vorhergehenden Ansprüche, wobei die Fehlerursachenanalyseeinheit (120) historische Daten zu ähnlichen Abweichungen nutzt, um die Information zu einer möglichen Fehlerursache (F) zu ermitteln.

11. System (W) nach einem der vorhergehenden Ansprüche, ferner umfassend:
eine Wartungseinheit (135), die dazu vorgesehen und eingerichtet ist, basierend auf dem zukünftigen Zustand der Maschine (100) eine Wartung durchzuführen, wobei die Wartungseinheit (135) eine Vielzahl von Wartungswerkzeugen bereitstellt, die bei der Wartung der Maschine (100) zum Einsatz kommen.

12. System (W) nach Anspruch 11, wobei die Wartungseinrichtung vorgesehen und eingerichtet ist, Wartungsschritte basierend auf der prädiktiven Wartung zu ermitteln und einen Fortschritt bei der Durchführung der Wartungsschritte zu überwachen.

13. System (W) nach einem der vorhergehenden Ansprüche, wobei die Prädikationseinheit (125) eine Benutzeroberfläche (160) umfasst, über die Servicetechniker (B) auf die Maschinen- und Telemetriedaten (D) zugreifen und die prädiktive Wartung einsehen können.

14. System (W) nach einem der vorhergehenden Ansprüche, wobei das System (W) eine Servicestation (140) und eine Auftragserstellungseinheit (145) umfasst und wobei die Auftragserstellungseinheit (145) vorgesehen und eingerichtet ist, einen Arbeitsauftrag basierend auf der prädiktiven Wartung zu erstellen und den Arbeitsauftrag einer Servicestation (140) zuzuordnen.
